# EUROPEAN PATENT SPECIFICATION

(11) **EP 4 044 001 B1**
(45) Date of publication and mention of the grant of the patent: **30.04.2025**
(21) Application number: 21157278.9
(22) Date of filing: 16.02.2021
(51) Int. Cl.: G06F 3/01, G06T 19/20

(54) **A METHOD FOR GENERATING A THREE-DIMENSIONAL INTERACTION MODEL**
VERFAHREN ZUR ERZEUGUNG EINES DREIDIMENSIONALEN INTERAKTIONSMODELLS
PROCÉDÉ DE GÉNÉRATION D'UN MODÈLE D'INTERACTION TRIDIMENSIONNEL

(43) Date of publication of application: 17.08.2022
(73) Proprietor: Deutsche Telekom AG, 53113 Bonn (DE)
(72) Inventor: DECKER, Frank, 70378 Stuttgart (DE)
(74) Representative: Vossius & Partner Patentanwälte Rechtsanwälte mbB

(56) References cited:
- US-A1- 2019 361 589
- US-A1- 2020 249 819

## Description

The present disclosure relates to methods and devices for generating a three-dimensional interaction model, in particular for a virtual reality device or an augmented reality device based on a 3D model and realtime location data of a position-tracked object.

The current implementation and use of positioning and tracking technologies in 5G, UWB, RTLS, LTE and RFID, for example based on the OMLOX standard (https://omlox.com/home) results in numerous use cases around position detection. Cost-intensive tools, pallets with orders, guided or driverless transport systems, warehouse inventories are tagged and can be located with such positioning and tracking technologies.

At present, the located tags (trackables) are displayed graphically on a two-dimensional (2D) system (e.g. a two-dimensional map) or on very basic 3D CAD models. The 2D maps are sufficient as a rough orientation in the terrain.

US 2019/361589 A1 relates to systems and method for enabling two-way interactive operations of real-time 3D virtual replicas and real objects.

US 2020/249819 A1 relates to systems and methods that enable augmented reality, virtual reality, and/or other content to be associated with precise geo-spatial locations in a physical environment.

However, in some prior art systems there is a need to provide a more exact mapping of the position. In addition, some prior art systems have problems with providing sufficient information on the position in indoor environments.

The above-mentioned objects are achieved with the features of the independent claims. Dependent claims define preferred embodiments of the invention.

In particular, the present invention provides a method for generating a three-dimensional, 3D, interaction model for a virtual reality device or an augmented reality device as set out in claim 1.

Various embodiments may preferably implement the following features.

The 3D model of the environment is preferably a 3D model of an indoor environment.

The aforementioned method may preferably be executed on a single device. Alternatively, the method may be executed on several (wireless or wired) connected devices.

Obtaining a three-dimensional, 3D, model of an environment preferably comprises: receiving the 3D model of the environment from an external source or generating the 3D model of the environment based on received raw data.

The 3D model of the environment is preferably based on 3D modelling, CAD data, or a 3D scan.

The 3D scan is preferably based on a light detection and ranging, LIDAR, scan. However, other known 3D scanning methods may be used as well. For such a LIDAR scan suitable cameras/devices may be used, such as the Matterport Pro 2 or Iphone 12 pro or Ipad Pro.

The use of a 3D scan is preferred, because 3D modelling and the use of CAD data may be more time-consuming and more complex than a 3D scan. That is, the 3D scan may be easier and faster than 3D modelling and the use of CAD data.

The location data are realtime location data of the position-tracked object.

The at least one 3D metamodel represents a model that is derived from historical location data of the at least one position-tracked object.

More particular, a 3D metamodel may prefereably include meta information such as position data and its characteristics and any information that may be derived for the position data and its characteristics. The 3D metamodel may be a heatmap, rewind to the past, etc.

Generating a 3D interaction model for a virtual reality device or an augmented reality device based on the 3D model of the environment and the at least one 3D model of the position-tracked object and the at least one 3D metamodel and the received location data preferably comprises: generating the 3D interaction model based on the current location data of the at least one 3D model of the position-tracked object.

The location data is preferably obtained by an indoor localization technique, wherein the localization technique is based on Ultra Wide Band, UWB, or Bluetooth Low Energie, BLE, and wherein the method preferably receives the location data over an application programming interface, API.

Although an indoor localization technique is mentioned at this point, it is clear that any known localization technique may be used that is able to provide the respective location data. In particular, if the environment is an outdoor environment, the localization technicque may preferably be an outdoor localization technique instead of an indoor localization technique. However, the may be independent of the environment being an indoor or an outdoor environment as long as the respective localization technique is able to provide the respective location data.

For receiving the location data over an API, the method may preferably receive (acquire) the location data from a service such as the "Omlox Hub" (https://omlox.com/home) or the like.

The location data is preferably repeatedly received in predetermined time intervals or continuously and the positioning of the 3D model of the position-tracked object within the 3D model of the environment is updated based on the latest location data.

The received location data is preferably stored in a database (or any API / cloud service) in association with a respective timestamp to create historical location data.

Generating a 3D interaction model for a virtual reality device or an augmented reality device based on the 3D model of the environment and the at least one 3D model of the position-tracked object and the at least one 3D metamodel and the received location data comprises: generating the 3D interaction model based on the historical location data of the at least one 3D model of the position-tracked object.

Generating the 3D interaction model based on the historical location data of the at least one 3D model of the position-tracked object comprises: displaying the 3D model of the position-tracked object in the 3D model of the environment at multiple times.

"At multiple times" may refer to times in the past, but may include also the current time.

The method may preferably further comprise: providing the 3D interaction model to a virtual reality device or an augmented reality device.

The virtual reality device or the augmented reality device may preferebaly be a mobile device, such as a mobile phone, a tablet, a laptop, a smart watch, smart glasses or other wearables etc. However, the virtual reality device or the augmented reality device may also be a stationary device such as a TV or a desktop computer.

The method may preferably further comprise: displaying the 3D interaction model on a virtual reality device or an augmented reality device based on the received location data.

The present disclosure also relates to a computing device comprising a processor, wherein the processor is configured to execute the method as described above.

In summary, the embodiments of the present disclosure consist of a unique combination of existing technologies and integrates current trends around gamification in virtual reality (VR) and augmented reality (AR) to display live location data to the end user in a more realistic, immersive environment.

In particular, the proposed 3D visualization provides an environement, e.g. an entire factory, where live location data is visualized by real 3D models. The real 3D (interaction) model can be generated by current methods of 3D scanning. By employing 3D navigation, the virtual factory can be explored from all sides or flown through. Objects to be searched for can thus be found faster and more intuitively. At the same time, the 3D representation of the factory provides a higher degree of immersion for a user. The immersion level could further be enhanced by outputting the 3D interaction model to a VR headset.

In other words, the embodiments of the present disclosure provide a 3D interaction model to display live location and metadata to the end user in a realistic, immersive and virtual environment. The embodiments employ, inter alia, new camera technologies such as Lidar to capture a 3D image of a factory. This serves as a basis to build a photorealistic virtual factory (a 3D model of the environemnt).

In addition, trackables (e.g., forklifts, AGVs, or even people) are mapped as a graphical 3D model and displayed in the 3D factory. The real position data of the trackables can be animated in the virtual factory. This makes it possible to see in the virtual environment what is happening live in the factory (telepresence). By switching to a VR view (e.g. using VR glasses), it is possible to experience this virtual world. The AR mode is intended to display specific information and models in the real environment. Thus, geofencedata can be drawn live in the real environment.

According to embodiments of the present disclosure, mapping of analytical data e.g. heatmap function for visualization of storage times or typical routes of vehicles may be provided. In addition, AR solutions allow displaying metadata of trackables within the factory. Thus, providing navigations to a specific object the user is looking for.

Via WebGL, the 3D graphics are directly executable in most browsers and can be mapped via a client/server architecture. Thus, no additional installation on the client side may be necessary.

The embodiments of the present disclosure provide a more exact mapping, e.g. for indoor navigation, which is closer to reality. In addition, the COVID-19 pandemic has also created the need to present location solutions to customers in a purely virtual way and to create a positive customer experience, which is provided by the aforementioned embodiments.

Moreover, the indoor localization and visualization of a position in an indoor environment can be enhanced by the foregoing embodiments, because different building levels can be represented accuarately. Additional information, such as geofences (virtual areas) or heat maps can also be defined. The present embodiments further provide the possibility for virtual customer events that provide the necessary customer experience.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig. 1 is a schematic illustration of a method according to an embodiment of the present disclosure.
Fig. 2a is a schematic illustration of an augmented reality device using the method according to an embodiment of the present disclosure.
Fig. 2b is another is a schematic illustration of an augmented reality device using the method according to an embodiment of the present disclosure.
Fig. 3 is another is a schematic illustration of an augmented reality device using the method according to an embodiment of the present disclosure.
Fig. 4 is a flow chart of a method according to an embodiment of the present disclosure.

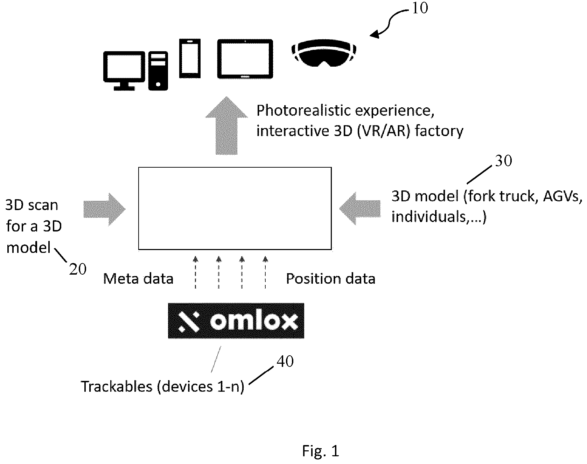

Fig. 1a schematically shows a method according to an embodiment of the present disclosure. In particular, the method receives (obtaines) input data. In particular, the method receives a 3D scan of the environment, e.g. a fabrication hall, storage facility or the like. The 3D scan may be raw data for creating a 3D model 20 of the environment. Alternatively, the respective input may be the 3D model 20 of the environment itself.

The method further receives (obtaines) a 3D model 30 of an object 40. The object 40 may be, e.g., a fork truck, AGVs, individuals, goods, tools, airplanes or the like. The object 40 may be reffered to as a position-tracked object 40 (or "trackables"), because the object 40 is an object 40, which position can be tracked.

The position data of said object 40 is received through an API, for example. For receiving the location data over an API, the method may receive (acquire) the location data from a service such as the "Omlox Hub" (https://omlox.com/home) or the like. This way, the respective object 40 can be tracked in realtime and the respective information is provided to the method of the present disclosure.

Alternatively or in addition, the method may further receive meta data connected to the 3D model 30 of the position-tracked object 40. The meta data may allow the method to create specific information useful for a user, such as order number, part number, customer information, production or order state. This information may be used to be displayed in an augmented or virtual reality device 10 or on other devices like tablets, Smartphones, Desktops to provide a user with useful or required information.

The meta data and/or the position data may also be used to create a 3D metamodel related to the 3D model 30 of the position-tracked object 40. A 3D metamodel is a model that is derived from historical location data of the at least one position-tracked object 40. More particular, a 3D metamodel may prefereably include meta information such as position data and its characteristics and any information that may be derived for the position data and its characteristics. The 3D metamodel may be a heatmap, rewind to the past, etc.

The method combines the various inputs outlined above and generates a 3D interaction model for a virtual reality device or an augmented reality device (collectively designated with reference numeral 10) based on the 3D model 30 of the position-tracked object 40, the 3D model 20 of the environment and realtime location data of the position-tracked object 40.

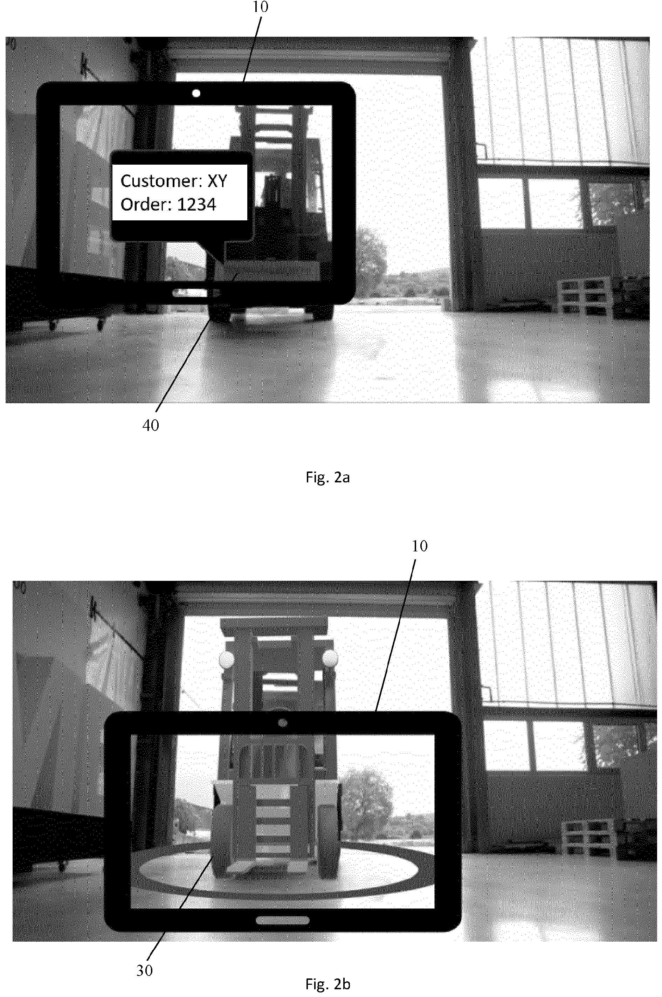

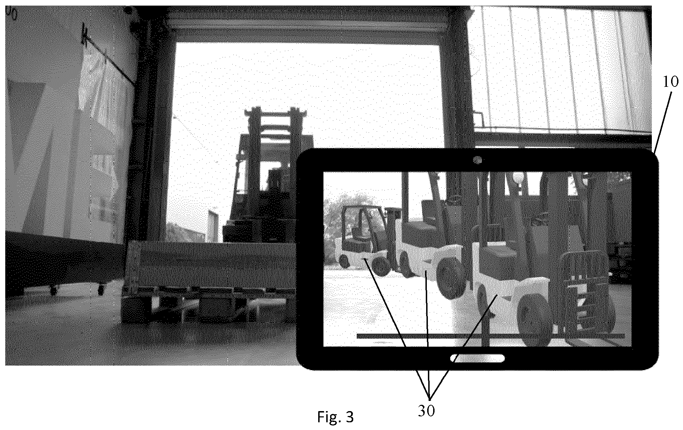

The method then provides the 3D interaction model to a suitable device 10 for virtual reality or augmented reality applications. For example, the user may take a virtual tour through a workshop or a storage facility without the need to be actually present in person (virtual reality application). In another example, the user may use his/her mobile device to identify objects 40 (such as tools) within a workshop by using an augmented reality application. In this case, the tool may be the position-tracked object 40 and the method can provide the user with an indication on the location of the object on his/her mobile device. Further examples are outlined in the following with reference to Figs. 2 and 3.

Fig. 2a shows an exemple for how the method according to the present disclosure can be used for an augmented reality application. In particular, Fig. 2a shows the user device (augmented reality device 10). The position tracked-object 40 in this case may be a certain pallet with goods, which is shown in Fig. 2 to be carried by a fork truck (the fork truck may itself be a position-tracked object 40). Here the user may be provided with the respective customer ID (here XY) and the order number (here 1234) when the mobile device 10 is pointed towards the position-tracked object 40.

Another example for how the method according to the present disclosure can be used for an augmented reality application is shown in Fig. 2b. Here the 3D model 30 of the position-tracked object 40 (here a fork truck) is shown on the mobile device 10 of the user. In this case, the 3D model 30 may be indicated at the current position or at a past position. The user may also be provided with further information (not shown) associated with the 3D model 30, e.g. the ID of the fork truck or the like.

Another example for how the method according to the present disclosure can be used for an augmented reality application is shown in Fig. 3. Here the 3D model 30 of the position-tracked object 40 (here a fork truck) is shown on the mobile device 10 of the user at different times. That is, historical position data is used (with or without the current position data) to indicate the positon of the 3D model 30 at different times. This may be used, for example, to recreate the events leading to an accident.

It is understood that the foregoing examples are not limited to display only the specific information/models described. It is also possible to display more than one model and/or information on a respective user device 10 at a time.

In addition, the position data and/or meta data may be used to create 3D metamodels such as heat maps. Heat maps according to the present disclosure refer to a visualization of the frequency (occurance) of an object 40 being at a certain position. That is, a heat map may indicate a color coded map (within the 3D model of the environment in a virtual reality application or on the user device 10 in an augmented reality application) on where the position-tracked object 40 was during a certain period of time. This may indicate the moving path of the object and/or in which areas the object 40 was located the most.

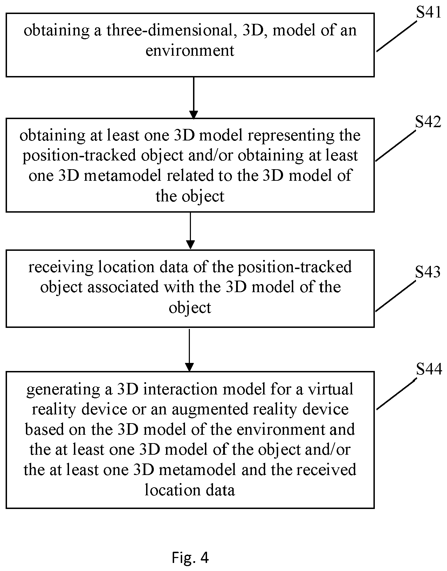

Fig. 4 is a flow chart of a method according to an embodiment of the present disclosure. In particular, Fig. 4 shows a method for generating a three-dimensional, 3D, interaction model for a virtual reality device or an augmented reality device based on a 3D model and realtime location data of a position-tracked object.

In an embodiment, the method according to Fig. 4 comprises the following steps:
Step S41: obtaining a three-dimensional, 3D, model of an environment.
Step S42: obtaining at least one 3D model representing the position-tracked object and/or obtaining at least one 3D metamodel related to the 3D model of the object.
Step S43: receiving location data of the position-tracked object associated with the 3D model of the object.
Step S44: generating a 3D interaction model for a virtual reality device or an augmented reality device based on the 3D model of the environment and the at least one 3D model of the object and the at least one 3D metamodel and the received location data.

In an embodiment, the generated three-dimensional model is suitable and intended to be displayed in space on a terminal device by means of an augmented reality framework.

In an embodiment the 3D model of the environment is a 3D model of an indoor environment.

In an embodiment, obtaining a three-dimensional, 3D, model of an environment comprises: receiving the 3D model of the environment from an external source or generating the 3D model of the environment based on received raw data.

In an embodiment, the 3D model of the environment is based on 3D modelling, CAD data, or a 3D scan.

In an embodiment, the 3D scan is based on a light detection and ranging, LIDAR, scan.

The location data are realtime location data of the position-tracked object.

The at least one 3D metamodel represents a model that is derived from historical location data of the at least one position-tracked object.

In an embodiment, generating a 3D interaction model for a virtual reality device or an augmented reality device based on the 3D model of the environment and the at least one 3D model of the position-tracked object and the at least one 3D metamodel and the received location data comprises: generating the 3D interaction model based on the current location data of the at least one 3D model of the position-tracked object.

In an embodiment, the location data is obtained by an indoor localization technique, wheren the localization technique is based on Ultra Wide Band, UWB, or Bluetooth Low Energie, BLE, and wherein the method preferably receives the location data over an application programming interface, API.

In an embodiment, the location data is repeatedly received in predetermined time intervals or continuously and the positioning of the 3D model of the position-tracked object within the 3D model of the environment is updated based on the latest location data.

In an embodiment, the received location data is stored in a database in association with a respective timestamp to create historical location data.

Generating a 3D interaction model for a virtual reality device or an augmented reality device based on the 3D model of the environment and the at least one 3D model of the position-tracked object and the at least one 3D metamodel and the received location data comprises: generating the 3D interaction model based on the historical location data of the at least one 3D model of the position-tracked object.

Generating the 3D interaction model based on the historical location data of the at least one 3D model of the position-tracked object comprises: displaying the 3D model of the position-tracked object in the 3D model of the environment at multiple times.

In an embodiment, the method further comprises: providing the 3D interaction model to a virtual reality device or an augmented reality device.

In an embodiment, the method further comprises: displaying the 3D interaction model on a virtual reality device or an augmented reality device based on the received location data.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the scope of the present invention should not be limited by any of the above-described exemplary embodiments, but solely by the appended claims.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the invention is not intended to be limited to the implementations shown herein, but is to be accorded the widest scope consistent with the features recited in the claims below.

## Claims

1. A method for generating a three-dimensional, 3D, interaction model for a virtual reality device (10) or an augmented reality device (10) based on a 3D model (30) and realtime location data of a position-tracked object (40), the method comprising:
obtaining (S41) a three-dimensional, 3D, model (20) of an environment;
obtaining (S42) at least one 3D model (30) representing the position-tracked object (40) and obtaining at least one 3D metamodel related to the 3D model (30) of the position-tracked object (40), wherein the at least one 3D metamodel represents a model that is derived from historical location data of the position-tracked object (40);
receiving (S43) location data of the position-tracked object (40) associated with the 3D model (30) of the position-tracked object (40), wherein the location data are realtime location data of the position-tracked object (40); and
generating (S44) a 3D interaction model for a virtual reality device (10) or an augmented reality device (10) based on the 3D model (20) of the environment and the at least one 3D model (30) of the position-tracked object (40) and the at least one 3D metamodel and the received location data by displaying the at least one 3D model (30) of the position-tracked object (40) in the 3D model (20) of the environment at multiple positions simultaneously, the multiple positions being positions of the at least one 3D model (30) of the position-tracked object (40) at multiples times, wherein the historical location data are used for the multiple times.

2. The method of claim 1, wherein the 3D model (20) of the environment is a 3D model of an indoor environment.

3. The method of claim 1 or 2, wherein obtaining a three-dimensional, 3D, model (20) of an environment comprises: receiving the 3D model (20) of the environment from an external source or generating the 3D model (20) of the environment based on received raw data.

4. The method of any one of claims 1 to 3, wherein the 3D model (20) of the environment is based on 3D modelling, CAD data, or a 3D scan.

5. The method of claim 4, wherein the 3D scan is based on a light detection and ranging, LIDAR, scan.

6. The method of any one of claims 1 to 5, wherein generating a 3D interaction model for a virtual reality device (10) or an augmented reality device (10) based on the 3D model (20) of the environment and the at least one 3D model (30) of the position-tracked object (40) and the at least one 3D metamodel and the received location data comprises:
generating the 3D interaction model based on the current location data of the at least one 3D model (30) of the position-tracked object (40).

7. The method of any one of claims 1 to 6, wherein the location data is obtained by an indoor localization technique, wheren the localization technique is based on Ultra Wide Band, UWB, or Bluetooth Low Energie, BLE, and wherein the location data is preferably received over an application programming interface, API.

8. The method of any one of claims 1 to 7, wherein the location data is repeatedly received in predetermined time intervals or continuously and the positioning of the at least one 3D model (30) of the position-tracked object (40) within the 3D model (20) of the environment is updated based on the latest location data.

9. The method of claim 8, wherein the received location data is stored in a database in association with a respective timestamp to create the historical location data.

10. The method of any one of claims 1 to 9, wherein the at least one 3D metamodel comprises a visualiziation of the frequency of the position-tracked object being at certain positions.

11. The method of any one of claims 1 to 10, wherein the method further comprises:
providing the 3D interaction model to a virtual reality device (10) or an augmented reality device (10); and/or
displaying the 3D interaction model on a virtual reality device (10) or an augmented reality device (10) based on the received location data.

12. A computing device comprising a processor, wherein the processor is configured to execute the method of any one of claims 1 to 11.

## Patentansprüche

1. Verfahren zum Erzeugen eines dreidimensionalen, 3D, Interaktionsmodells für eine Virtual-Reality-Vorrichtung (10) oder eine Augmented-Reality-Vorrichtung (10) auf der Grundlage eines 3D-Modells (30) und von Echtzeit-Standortdaten eines positionsverfolgten Objekts (40), wobei das Verfahren umfasst:
Erhalten (S41) eines dreidimensionalen, 3D, Modells (20) einer Umgebung;
Erhalten (S42) zumindest eines 3D-Modells (30), das das positionsverfolgte Objekt (40) repräsentiert, und Erhalten zumindest eines 3D-Metamodells, das sich auf das 3D-Modell (30) des positionsverfolgten Objekts (40) bezieht, wobei das zumindest eine 3D-Metamodell ein Modell repräsentiert, das aus historischen Standortdaten des zumindest einen positionsverfolgten Objekts (40) abgeleitet ist;
Empfangen (S43) von Standortdaten des positionsverfolgten Objekts (40), die dem 3D-Modell (30) des positionsverfolgten Objekts (40) zugeordnet sind, wobei die Standortdaten Echtzeit-Standortdaten des positionsverfolgten Objekts (40) sind; und
Erzeugen (S44) eines 3D-Interaktionsmodells für eine Virtual-Reality-Vorrichtung (10) oder eine Augmented-Reality-Vorrichtung (10) auf der Grundlage des 3D-Modells (20) der Umgebung und des zumindest einen 3D-Modells (30) des positionsverfolgten Objekts (40) und des zumindest einen 3D-Metamodells und der empfangenen Standortdaten durch gleichzeitiges Anzeigen des zumindest einen 3D-Modells (30) des positionsverfolgten Objekts (40) in dem 3D-Modell (20) der Umgebung an mehreren Positionen, wobei die mehreren Positionen, Positionen des zumindest einen 3D-Modells (30) des positionsverfolgten Objekts (40) zu mehreren Zeitpunkten sind,
wobei die historischen Standortdaten für die mehreren Zeitpunkte verwendet werden.

2. Verfahren nach Anspruch 1, wobei das 3D-Modell (20) der Umgebung ein 3D-Modell einer Innenraumumgebung ist.

3. Verfahren nach Anspruch 1 oder 2, wobei das Erhalten eines dreidimensionalen, 3D, Modells (20) einer Umgebung umfasst: Empfangen des 3D-Modells (20) der Umgebung von einer externen Quelle oder Erzeugen des 3D-Modells (20) der Umgebung auf der Grundlage von empfangenen Rohdaten.

4. Verfahren nach einem der Ansprüche 1 bis 3, wobei das 3D-Modell (20) der Umgebung auf 3D-Modellierung, CAD-Daten oder einem 3D-Scan basiert.

5. Verfahren nach Anspruch 4, wobei der 3D-Scan auf einem LIDAR-Scan (Light Detection and Ranging) basiert.

6. Verfahren nach einem der Ansprüche 1 bis 5, wobei das Erzeugen eines 3D-Interaktionsmodells für eine Virtual-Reality-Vorrichtung (10) oder eine Augmented-Reality-Vorrichtung (10) auf der Grundlage des 3D-Modells (20) der Umgebung und des zumindest einen 3D-Modells (30) des positionsverfolgten Objekts (40) und des zumindest einen 3D-Metamodells und der empfangenen Standortdaten umfasst:
Erzeugen des 3D-Interaktionsmodells auf der Grundlage der aktuellen Standortdaten des zumindest einen 3D-Modells (30) des positionsverfolgten Objekts (40).

7. Verfahren nach einem der Ansprüche 1 bis 6, wobei die Standortdaten durch eine Innenraum-Lokalisierungstechnik erhalten werden, wobei die Lokalisierungstechnik auf Ultra Wide Band, UWB, oder Bluetooth Low Energie, BLE, basiert, und wobei die Standortdaten vorzugsweise über eine Anwendungsprogrammierschnittstelle, API, empfangen werden.

8. Verfahren nach einem der Ansprüche 1 bis 7, wobei die Standortdaten wiederholt in vorgegebenen Zeitintervallen oder kontinuierlich empfangen werden und die Positionierung des zumindest einen 3D-Modells (30) des positionsverfolgten Objekts (40) innerhalb des 3D-Modells (20) der Umgebung auf der Grundlage der neuesten Standortdaten aktualisiert wird.

9. Verfahren nach Anspruch 8, wobei die empfangenen Standortdaten in einer Datenbank in Verbindung mit einem jeweiligen Zeitstempel hinterlegt werden, um historische Standortdaten zu erzeugen.

10. Verfahren nach einem der Ansprüche 1 bis 9, wobei das zumindest eine 3D-Metamodell eine Visualisierung der Häufigkeit des Aufenthalts des positionsverfolgten Objekts an bestimmten Positionen umfasst.

11. Verfahren nach einem der Ansprüche 1 bis 10, wobei das Verfahren ferner umfasst:
Bereitstellen des 3D-Interaktionsmodells für eine Virtual-Reality-Vorrichtung (10) oder eine Augmented-Reality-Vorrichtung (10); und/oder
Anzeigen des 3D-Interaktionsmodells auf einer Virtual-Reality-Vorrichtung (10) oder einer Augmented-Reality-Vorrichtung (10) auf der Grundlage der empfangenen Standortdaten.

12. Rechenvorrichtung, umfassend einen Prozessor, wobei der Prozessor dazu ausgelegt ist, das Verfahren nach einem der Ansprüche 1 bis 11 durchzuführen.

## Revendications

1. Procédé de génération d'un modèle d'interaction 3D pour un dispositif de réalité virtuelle (10) ou un dispositif de réalité augmentée (10) sur la base d'un modèle 3D (30) et de données de localisation en temps réel d'un objet suivi en position (40), le procédé comprenant :
l'obtention (E41) d'un modèle tridimensionnel 3D (20) d'un environnement ;
l'obtention (E42) d'au moins un modèle 3D (30) représentant l'objet suivi en position (40) et l'obtention d'au moins un métamodèle 3D lié au modèle 3D (30) de l'objet suivi en position (40) ; dans lequel l'au moins un métamodèle 3D représente un modèle qui est dérivé de données de localisation historiques de l'objet suivi en position (40) ;
la réception (E43) des données de localisation de l'objet suivi en position (40) associées au modèle 3D (30) de l'objet suivi en position (40), dans lequel les données de localisation sont des données de localisation en temps réel de l'objet suivi en position (40) ; et
la génération (E44) d'un modèle d'interaction 3D pour un dispositif de réalité virtuelle (10) ou un dispositif de réalité augmentée (10) sur la base du modèle 3D (20) de l'environnement et de l'au moins un modèle 3D (30) de l'objet suivi en position (40) et de l'au moins un métamodèle 3D et des données de localisation reçues en affichant l'au moins un modèle 3D (30) de l'objet suivi en position (40) dans le modèle 3D (20) de l'environnement sur de multiples positions simultanément, les positions multiples étant des positions de l'au moins un modèle 3D (30) de l'objet suivi en position (40) à des moments multiples,
dans lequel les données de localisation historiques sont utilisées pendant des moments multiples.

2. Procédé selon la revendication 1, dans lequel le modèle 3D (20) de l'environnement est un modèle 3D d'un environnement intérieur.

3. Procédé selon la revendication 1 ou 2, dans lequel l'obtention d'un modèle tridimensionnel 3D (20) d'un environnement comprend : la réception du modèle 3D (20) de l'environnement d'une source externe ou la génération du modèle 3D (20) de l'environnement sur la base de données brutes reçues.

4. Procédé selon l'une quelconque des revendications 1 à 3, dans lequel le modèle 3D (20) de l'environnement se base sur une modélisation 3D, des données CAO ou une numérisation 3D.

5. Procédé selon la revendication 4, dans lequel le balayage 3D est basé sur un balayage de détection et de télémétrie par lumière, LIDAR.

6. Procédé selon l'une quelconque des revendications 1 à 5, dans lequel la génération d'un modèle d'interaction 3D pour un dispositif de réalité virtuelle (10) ou un dispositif de réalité augmentée (10) sur la base du modèle 3D (20) de l'environnement et de l'au moins un modèle 3D (30) de l'objet suivi en position (40) et de l'au moins un métamodèle 3D et des données de localisation reçues comprend :
la génération du modèle d'interaction 3D sur la base des données de localisation actuelles de l'au moins un modèle 3D (30) de l'objet suivi en position (40).

7. Procédé selon l'une quelconque des revendications 1 à 6, dans lequel les données de localisation sont obtenues par une technique de localisation en intérieur, dans lequel la technique de localisation est basée sur Ultra Wide Band (UWB) ou Bluetooth Low Energie (BLE), et dans lequel les données de localisation sont reçues de préférence sur une interface de programmation d'application (API).

8. Procédé selon l'une quelconque des revendications 1 à 7, dans lequel les données de localisation sont reçues de manière répétée à des intervalles de temps prédéterminés ou en continu et le positionnement de l'au moins un modèle 3D (30) de l'objet suivi en position (40) dans le modèle 3D (20) de l'environnement est mis à jour sur la base des dernières données de localisation.

9. Procédé selon la revendication 8, dans lequel les données de localisation reçues sont stockées dans une base de données en association avec un horodatage pour créer les données de localisation historiques.

10. Procédé selon l'une quelconque des revendications 1 à 9, dans lequel l'au moins un métamodèle 3D comprend une visualisation de la fréquence de l'objet suivi en position qui se trouvent sur certaines positions.

11. Procédé selon l'une quelconque des revendications 1 à 10, dans lequel le procédé comprend en outre :
la fourniture du modèle d'interaction 3D à un dispositif de réalité virtuelle (10) ou à un dispositif de réalité augmentée (10) ; et/ou
l'affichage du modèle d'interaction 3D sur un dispositif de réalité virtuelle (10) ou un dispositif de réalité augmentée (10) sur la base des données de localisation reçues.

12. Dispositif informatique comprenant un processeur, dans lequel le processeur est configuré pour exécuter le procédé selon l'une quelconque des revendications 1 à 11.
